# EUROPEAN PATENT APPLICATION

(11) **EP 1 562 116 A1**
(43) Date of publication of application: **10.08.2005**
(21) Application number: 03701871.0
(22) Date of filing: 24.01.2003
(51) Int. Cl.: G06F 9/48

(54) **INTERRUPT CONTROL METHOD AND INTERRUPT CONTROL DEVICE**

(71) Applicant: FUJITSU LIMITED, Kawasaki-shi, Kanagawa 211-8588 (JP)
(72) Inventor: KUKI, Kazunori, c/o FUJITSU VLSI LIMITED, Kasugai-shi, Aichi 487-0013 (JP); TANAKA, Masahiro, c/o FUJITSU VLSI LIMITED, Kasugai-shi, Aichi 487-0013 (JP); KANMA, Hirokazu, c/o FUJITSU VLSI LIMITED, Kasugai-shi, Aichi 487-0013 (JP)
(74) Representative: Fenlon, Christine Lesley
(86) International application number: PCT/JP2003/000670
(87) International publication number: WO 2004/066150

(57) **Abstract**

Interrupt number setting circuits, each includes a register and a decoder, are provided for each individual interrupt factor (macro), and an arbitrary interrupt number is set in the register. For example, when an interrupt occurs in an interrupt factor (201a), the decoder (202a-2) reads an interrupt number 15 that is set in the register (202a-1), and an interrupt signal is output from one of the bus lines corresponding to the number. OR circuits (203a to 203g) in a controller-selecting circuit (203) output the signal to one of a plurality of interrupt controllers, for example a controller (204a), which executes interrupt processing of the interrupt number 15. Consequently, a wide variety of interrupts that are required by a user can be controlled while limiting the circuit size.

## Description

### TECHNICAL FIELD

The present invention relates to an interrupt control method and an interrupt control device that execute predetermined interrupt processing by using one interrupt controller, to which an interrupt signal from another device is input, among a plurality of interrupt controllers.

### BACKGROUND ART

Not only so-called information equipment, such as personal computers and personal digital assistances, but also almost all generally-used electric appliances, such as AV equipment, cooking appliances, refrigerators, washing machines, and air conditioners, are controlled by central processing units (CPU).

Along with wider use of CPUs, intensive research and development of multi-functional, highly functional, and highly versatile system LSI, which can be mounted in various types of devices, are conducted.

If users, such as manufacturers of home appliances, can select any necessary function of such a chip as necessary, an LSI need not be adapted to each product by using just one chip, enabling reduction of development costs and initial investment in factories.

However, attempt to increase the versatility of the chip inevitably increases the size and complexity of the circuit. In particular, since a great variety of macros are connected to the chip according to the product, a complex and large-scale circuit is needed just to control interrupts from these macros.

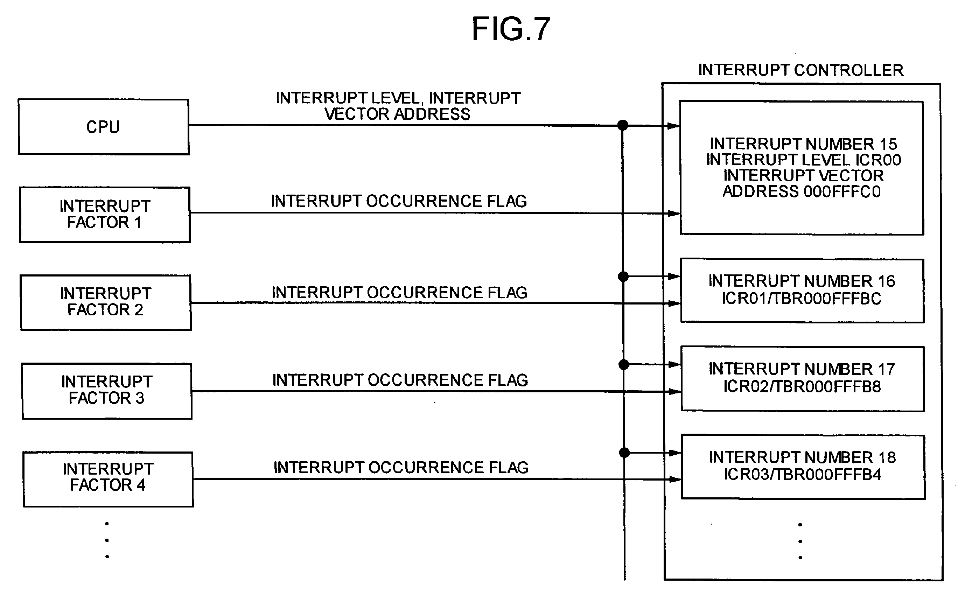

As shown in Fig. 7, when designing the hardware of a conventional system LSI, one interrupt number and one interrupt controller that executes processing identified by the number are exclusively provided for one interrupt factor (macro).

For example, as shown in Fig. 7, when a certain event that requires an interrupt occurs in an interrupt factor 1, an interrupt signal created by the interrupt factor 1 is not physically input to any interrupt controller other than one having an interrupt number of 15. When the signal is input to the controller, the controller executes interrupt processing of number 15 in compliance with its own interrupt conditions such as interrupt level and an interrupt vector address.

It is therefore essential in the conventional technique to provide interrupt mechanisms as much in number as the total number of interrupt factors expected to be connected to the system LSI, increasing the size and complexity of the circuit. Users of products in which the system LSIs are incorporated, such as home appliances, strongly demand miniaturization (reduction in size of components themselves, or reduction of the number of the components) and price restrictions of the LSI.

With respect to the above points, conventional techniques include one that stores a list of interrupt numbers in a rewriteable memory, specifies an address of the memory, and determines an interrupt vector address by using the interrupt number that is stored at that address. According to the conventional technique, while the interrupt vector address can be changed dynamically by rewriting the memory, other interrupt conditions cannot be changed (see, for example, Japanese Patent Application Laid-Open No. H10-11411).

The present invention has been achieved to solve the problems of the conventional techniques, and it is an object of the present invention to provide an interrupt control method and an interrupt control device that can control various types of interrupts required by a user, while limiting the circuit size.

### DISCLOSURE OF THE INVENTION

To solve the above problems and to achieve the object, the interrupt control method and interrupt control device according to the present invention execute predetermined interrupt processing by using one interrupt controller, to which an interrupt signal from another device is input, among a plurality of interrupt controllers. The interrupt control device/interrupt control method sets an interrupt number for each of the other devices, and selects one among the interrupt controllers based on the set interrupt number.

The interrupt control method and the interrupt control device according to the present invention can set the interrupt numbers in a register of each of the other devices. An interrupt controller, to which the interrupt signal is input, can be selected from among some of the interrupt controllers. An interrupt inhibit number for inhibiting an interrupt of the other device can be set, and the inhibition of interrupt can be notified to the other device whose interrupt inhibit number is set. An interrupt inhibit number can be set in a register of each of the other devices.

### BRIEF DESCRIPTION OF THE DRAWINGS

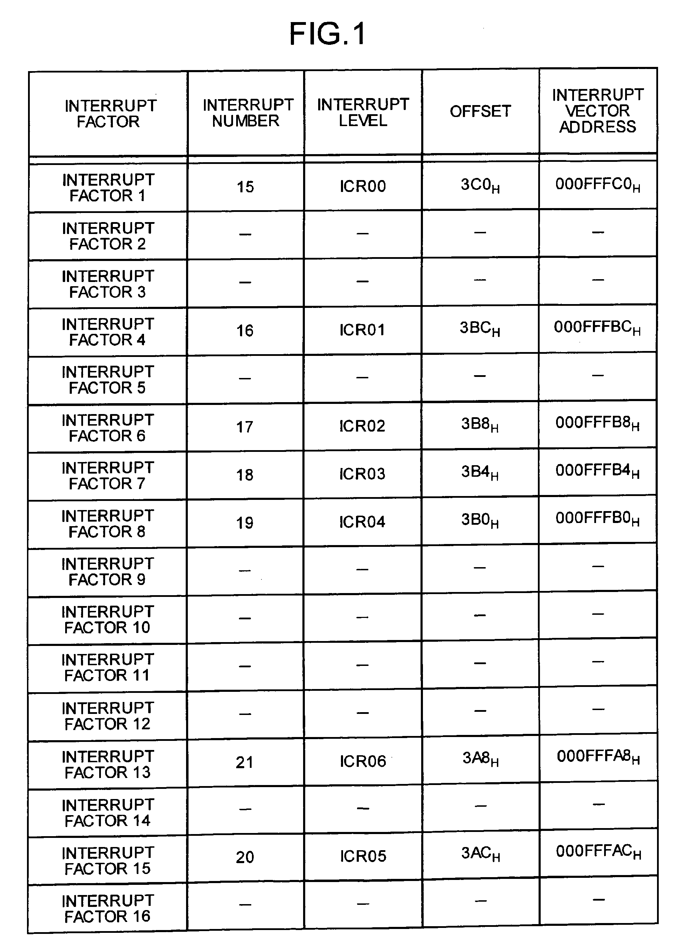

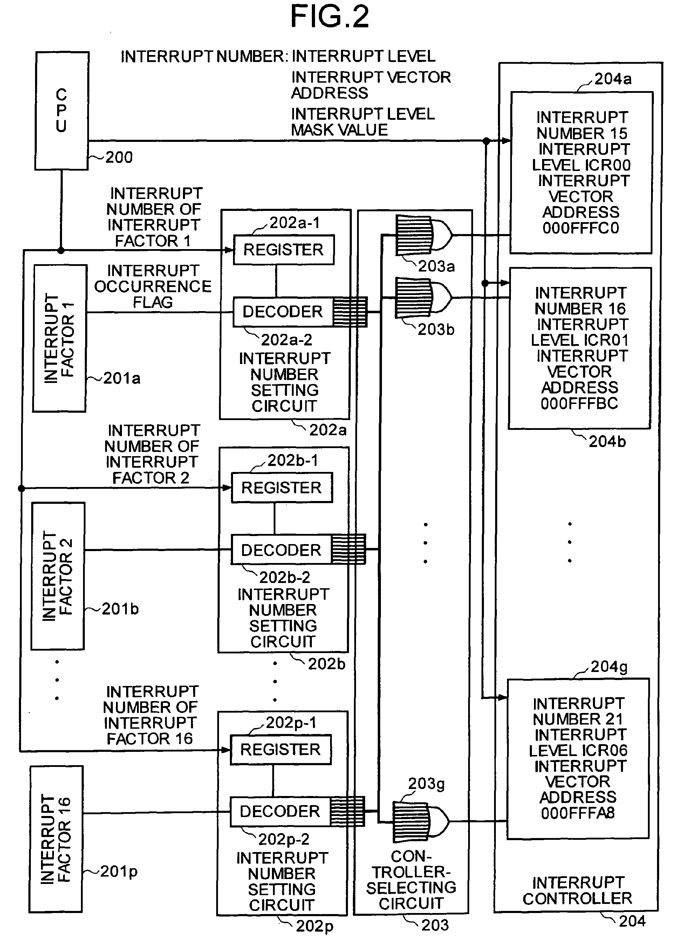

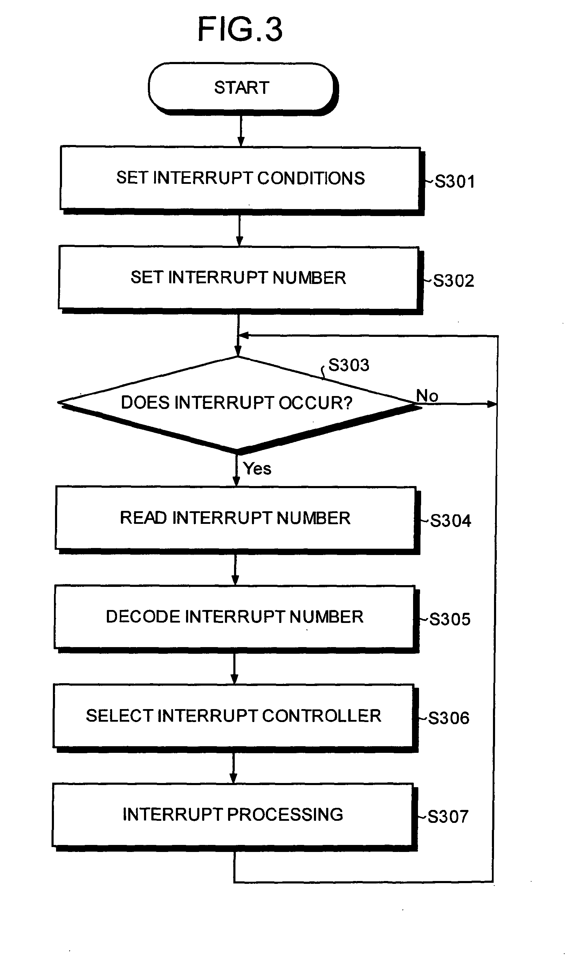

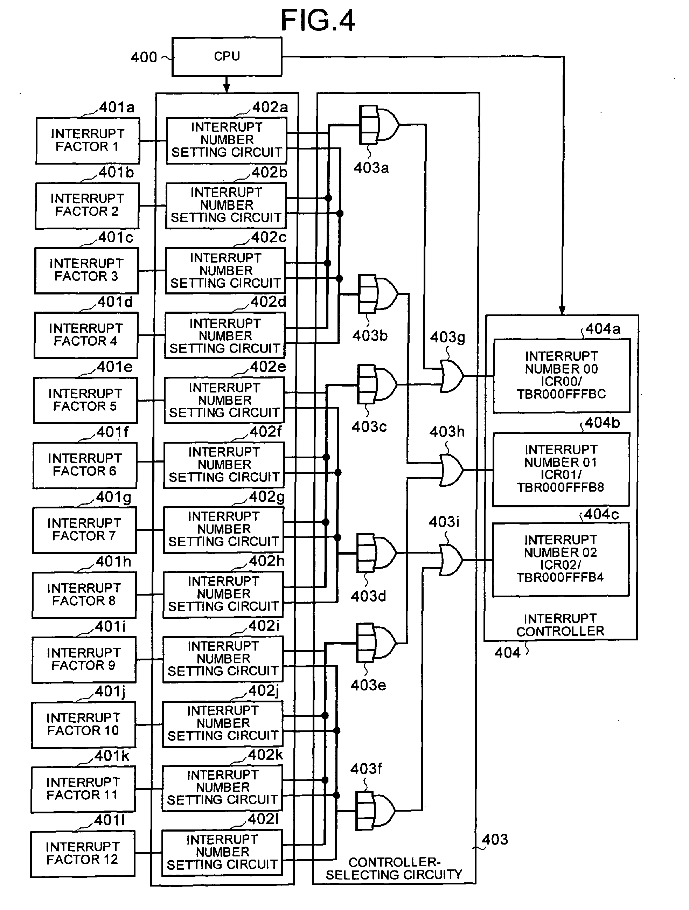

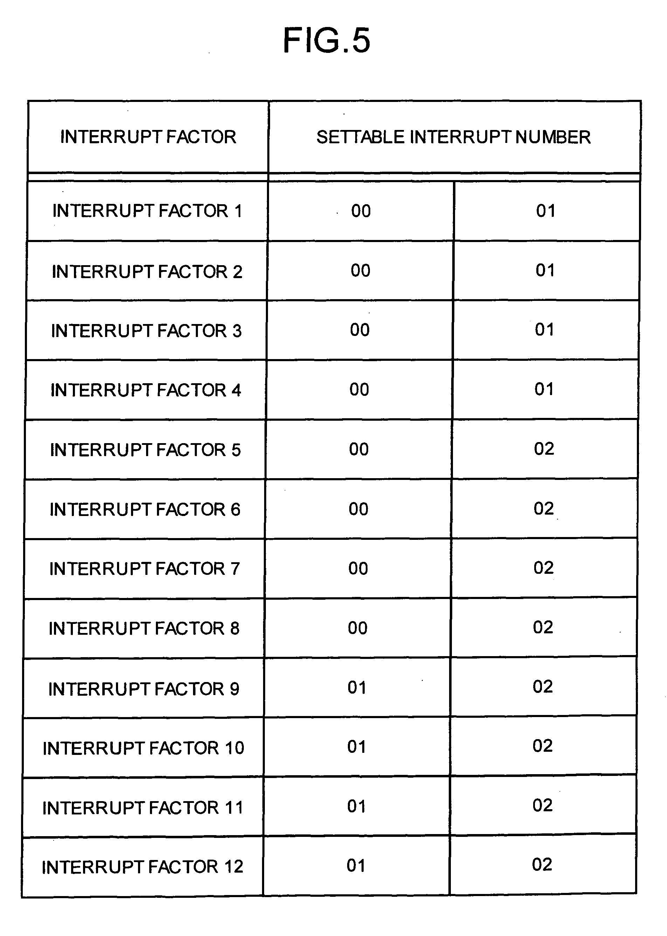

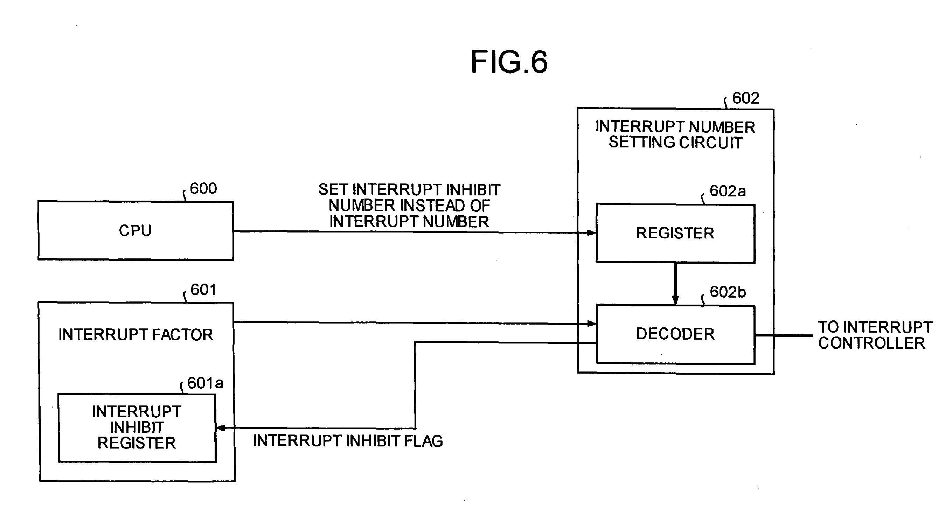

Fig. 1 is an explanatory diagram of the relationship between a combination of interrupt factors, interrupt conditions, and interrupt numbers that are individually allocated to the interrupt factors in an appliance A, as one of various types of devices incorporating the interrupt control device according to a first embodiment of the present invention; Fig. 2 is a schematic explanatory diagram of the hardware configuration of the interrupt control device according to the first embodiment of the present invention; Fig. 3 is a flowchart of a sequence of interrupt control processing in the interrupt control device according to the first embodiment of the present invention; Fig. 4 is a schematic explanatory diagram of the hardware configuration of an interrupt control device according to a second embodiment of the present invention; Fig. 5 is a list of interrupt numbers that can be respectively set in interrupt number setting circuits 402a to 402l according to the second embodiment of the present invention; Fig. 6 is a schematic explanatory diagram of the hardware configuration of an interrupt control device according to a third embodiment of the present invention; and Fig. 7 is a schematic explanatory diagram of the hardware configuration of a conventional interrupt control device.

### BEST MODE FOR CARRYING OUT THE INVENTION

Exemplary embodiments of an interrupt control method and an interrupt control device according to the present invention will be explained in detail with reference to the accompanying drawings.

### (First embodiment)

Fig. 1 is an explanatory diagram of the relationship between a combination of interrupt factors, interrupt conditions, and interrupt numbers that are individually allocated to the interrupt factors in an appliance A, as one of various types of devices incorporating the interrupt control device according to a first embodiment of the present invention (specifically, a system LSI incorporated in devices such as home appliances).

As shown in Fig. 1, it is assumed that there are only seven interrupts arising from interrupt factors 1, 4, 6, 7, 8, 13, and 15 in the appliance A, and interrupt numbers of 15, 16, 17, 18, 19, 20, and 21 are allocated to the factors, respectively. Another appliance B separate from the appliance A has a combination of interrupt factors, a priority level of interrupts between the factors, and the like, which are different from those shown in Fig. 1.

Fig. 2 is a schematic explanatory diagram of the hardware configuration of the interrupt control device according to the first embodiment of the present invention. Fig. 2 depicts the sections that are relevant to the present invention in various types of circuits in a system LSI that forms the interrupt control device of the present invention.

In Fig. 2, reference numeral 200 represents a CPU that sets an interrupt number for each register in interrupt number setting circuits 202a to 202p described below, and also sets various information needed in interrupt processing, such as interrupt levels and interrupt vector addresses in interrupt controllers 204a to 204g described below.

Reference numerals 201a to 201p represent interrupt factors, specifically macros and the like that execute specific processing. When an event occurs that requires an interrupt, a predetermined interrupt signal (interrupt occurrence flag) is output to interrupt number setting circuits 202a to 202p described below.

The number of interrupt number setting circuits 202a to 202p is equal to the number of interrupt factors. In this example, there are sixteen, one for each interrupt factor. Taking interrupt number setting circuit 202a as an example, this circuit is physically connected to the interrupt factor 1, and, when an interrupt occurs in a macro, is input an interrupt signal indicating this fact.

The interrupt number setting circuit 202a specifically includes a register 202a-1 and a decoder 202a-2. An interrupt number is allocated beforehand to the interrupt factor 1, and set in the register 202a-1 by the CPU 200. In the example shown in Fig. 1, interrupt number 15 is set. The decoder 202a-2 is a circuit that outputs a signal to one of a plurality of bus lines in compliance with the storage contents of the register 202a-1.

Reference numeral 203 represents a controller-selecting circuit that includes OR circuits 203a to 203g, one for each interrupt number, seven in the example shown in Fig. 2. The OR circuits 203a to 203g in the controller-selecting circuit 203 output signals, which are output from the decoders 202a-2 to 202p-2 of the interrupt number setting circuits 202a to 202p, to one of the interrupt controllers 204a to 204g.

Reference numeral 204 represents an interrupt controller that includes interrupt controllers 204a to 204g, one for each interrupt number, seven in the example shown in Fig. 2. In the explanation below, not only 204a to 204g but also 204, which is a set of 204a to 204g, is also termed "interrupt controller" unless there is a need to differentiate.

Fig. 3 is a flowchart of a sequence of interrupt control processing in the interrupt control device according to the first embodiment of the present invention. The CPU 200 that executes a predetermined program for setting interrupt information sets interrupt conditions specified by interrupt numbers 15 to 21 (e.g., interrupt level, interrupt vector address, interrupt level mask value, etc.) for each of the interrupt controllers 204a to 204g (step S301).

The CPU 200 then sets interrupt numbers, which are allocated to the corresponding interrupt factors 201a to 201p, in the registers 202a-1 to 202p-1 of the interrupt number setting circuits 202a to 202p (step S302). For example, an interrupt number 15, which is allocated to the interrupt factor 201a, is set in the register 202a-1, and a predetermined value indicating that no interrupt number is allocated is set in the register 202b-1. Steps S301 and S302 can be executed in reverse order.

When an interrupt signal from, for example, the interrupt factor 201a is input (step S303: Yes), the allocated interrupt number is read from the register 202a-1 in the interrupt number setting circuit 202a, which receives the interrupt signal, to the decoder 202a-2 (step S304).

The decoder 202a-2 decodes the number, i.e., the signal is output to one of the bus lines from the decoder 202a-2 (step S305). Of the OR circuits 203a to 203g, to which the signal is input, only the OR circuit 203a outputs 1, whereby an interrupt signal is input to the interrupt controller 204a that is connected to the circuit (step S306).

The interrupt controller 204a then executes the program at the interrupt vector address in accordance with a priority level and the like that is set thereto (step S307). When the program ends, processing returns to step S303 where the device waits for a new interrupt.

According to the first embodiment described above, it is possible to change the combination of interrupts, and the interrupt numbers and interrupt conditions that correspond to the interrupts, by controlling which interrupt number is set in which register of the interrupt number setting circuits 202a to 202p. Interrupt control devices that have identical hardware can be incorporated in various devices simply by changing the interrupt number settings and the like.

Since there is no wasteful mounting of controllers for interrupts that are not used at incorporating products, circuit size and power consumption can be reduced.

### (Second embodiment)

In the interrupt control device according to the first embodiment, the number of output lines from the decoders 202a-2 to 202p-2 of the interrupt number setting circuits 202a to 202p, and the number of input lines to the OR circuits 203a to 203g of the controller-selecting circuit 203, must be the same as the number of interrupt factors 201a to 201p.

Consequently, when attempting to deal with many interrupt factors to increase the versatility of the device, there is a problem of increasing the size and complexity of the circuit between the interrupt number setting circuits 202a to 202p and the interrupt controllers 204a to 204g. Accordingly, the circuit can be simplified by providing a certain degree of restriction on the interrupt number settings, as in a second embodiment explained below.

Fig. 4 is a schematic explanatory diagram of the hardware configuration of an interrupt control device according to the second embodiment of the present invention. In the interrupt control device according to the second embodiment, three interrupt numbers (as opposed to seven in the first embodiment) are allocated to twelve interrupt factors (sixteen in the first embodiment).

In the first embodiment shown in Fig. 2, while the interrupt number setting circuits 202a to 202p are each connected to the seven OR circuits 203a to 203g, interrupt number setting circuits 402a to 402l of the second embodiment are each connected to only two OR circuits.

For example, a signal output from the interrupt number setting circuit 402a that corresponds to an interrupt factor 401a is input only to an OR circuit 403a or 403b of preliminary stage OR circuits 403a to 403f. The signal then passes through a latter stage OR circuit 403g or 403h and is input only to an interrupt controller 404a or 404b of the three interrupt controllers. Therefore, of the three predetermined interrupt processes, only a process having number 0 or 1 can be activated.

In other words, the interconnections are such that, even when interrupt numbers other than "00" or "01" are set in the register of the interrupt number setting circuit 402a, the process cannot be executed in this hardware. That is, the interrupt numbers that can be set in the interrupt number setting circuit 402a are restricted to "00" and "01".

Fig. 5 is a list of interrupt numbers that can be respectively set in the interrupt number setting circuits 402a to 402l according to the second embodiment. As shown in Fig. 5, there are restrictions on the interrupt numbers that can be set in each circuit. For example, an interrupt number of "02" cannot be set in the interrupt number setting circuit 402a.

While the second embodiment imposes some restrictions on the interrupt numbers that can be set, there is an advantage that interconnections in a controller-selecting circuit 403 can be greatly simplified. Broader advantages can be obtained as the number of interrupt factors increases.

### (Third embodiment)

While the first and the second embodiments are examples that permit interrupts from a variety of macros connected to the interrupt control device, it is sometimes desirable to inhibit interrupts from a particular macro.

According to a third embodiment, a predetermined value that represents an interrupt inhibit can be set in the register of an interrupt setting circuit, so that the corresponding interrupt factor does not output the interrupt signal when this value is set.

While the hardware configuration of an interrupt control device according to the third embodiment of the present invention is approximately the same as that of the first embodiment shown in Fig. 2 or the second embodiment shown in Fig. 4, the interconnections around the interrupt number setting circuits are slightly different. Fig. 6 is a schematic explanatory diagram of the hardware configuration of the interrupt control device according to the third embodiment, for mainly explaining these differences.

As shown in the diagram, one data line from a decoder 602b in an interrupt number setting circuit 602 connects to an interrupt inhibit register 601a in an interrupt factor 601. When a CPU 600 sets a predetermined value that indicates an interrupt inhibit (hereinafter, "interrupt inhibit number") in a register 602a, the value on the output line from the decoder 602b that decodes the value becomes 1, and this signal is input to the interrupt inhibit register 601a.

An interrupt inhibit flag is set in the interrupt inhibit register 601a that receives the signal, and the interrupt factor 601 does not output an interrupt signal while the flag is set. The inhibit flag of the interrupt inhibit register 601a is cancelled when the CPU 600 rewrites the register 602a and sets an interrupt number instead of an interrupt inhibit number.

According to the third embodiment, an interrupt from an interrupt factor corresponding to the interrupt number setting circuit 602 can be inhibited by setting an interrupt inhibit number, instead of an interrupt number, in the circuit.

Since conventional techniques inhibit interrupts by setting the interrupt level to 0, the interrupt signal itself is transmitted from the interrupt factor to the interrupt controller. According to the present invention, since no interrupt signal is generated, the circuit is not occupied with an inhibited interrupt, making processing efficient.

### INDUSTRIAL APPLICABILITY

According to the present invention, a user who incorporates the system LSI according to the present invention in home appliances and the like can arbitrarily switch which interrupt is used, which processing is executed when an interrupt occurs, and the like, merely by changing interrupt numbers and interrupt inhibit numbers that are set in the register for each interrupt factor. This is ideal for an interrupt control method and an interrupt control device that can control a wide variety of interrupts required by the user while limiting the circuit size, especially in a system LSI having superior versatility and cost performance.

## Claims

1. An interrupt control method for executing predetermined interrupt processing by using one interrupt controller, to which an interrupt signal from another device is input, among a plurality of interrupt controllers, comprising:
an interrupt number setting step for setting an interrupt number for each of the other devices;
an interrupt number reading step for reading an interrupt number set at the interrupt number setting step; and
a controller-selecting step for selecting one among the interrupt controllers based on the interrupt number read at the interrupt number reading step.

2. The interrupt control method according to claim 1, wherein the interrupt number is set in a register for each of the other devices at the interrupt number setting step.

3. The interrupt control method according to claim 1 or 2, wherein an interrupt controller, to which the interrupt signal is input, is selected from among some of the interrupt controllers at the controller-selecting step.

4. The interrupt control method according to claim 1 or 2, further comprising:
an interrupt inhibit number setting step for setting an interrupt inhibit number for inhibiting an interrupt from the other device;
an interrupt inhibit number reading step for reading the interrupt inhibit number set at the interrupt inhibit number setting step; and
an interrupt permission/inhibition notifying step for notifying inhibition of interrupt to the other device for which the interrupt inhibit number is read at the interrupt inhibit number reading step.

5. The interrupt control method according to claim 4, wherein the interrupt inhibit number is set in a register for each of the other devices at the interrupt inhibit number setting step.

6. The interrupt control method according to claim 5, wherein the register, to which the interrupt number is set at the interrupt number setting step, is the same as the register, to which the interrupt inhibit number is set at the interrupt inhibit number setting step.

7. An interrupt control device that executes predetermined interrupt processing by using one interrupt controller, to which an interrupt signal from another device is input, among a plurality of interrupt controllers, comprising:
an interrupt number setting unit that sets an interrupt number for each of the other devices;
an interrupt number reading unit that reads an interrupt number set by the interrupt number setting unit; and
a controller-selecting unit that selects one among the interrupt controllers based on the interrupt number read by the interrupt number reading unit.

8. The interrupt control device according to claim 7, wherein the interrupt number setting unit sets the interrupt number in a register for each of the other devices.

9. The interrupt control device according to claim 7 or 8, wherein the interrupt number reading unit is a decoder that outputs an interrupt signal to a bus line, which corresponds to the interrupt number set by the interrupt number setting unit.

10. The interrupt control device according to claim 9, wherein the controller-selecting unit selects one among the interrupt controllers by using a plurality of OR circuits to input the interrupt signal, which is output from the interrupt number reading unit, to one of the interrupt controllers.

11. The interrupt control device according to claim 10, wherein the controller-selecting unit selects an interrupt controller, to which the interrupt signal is input, from among some of the interrupt controllers.

12. The interrupt control device according to claim 7 or 8, further comprising:
an interrupt inhibit number setting unit that sets an interrupt inhibit number for inhibiting an interrupt from the other device;
an interrupt inhibit number reading unit that reads the interrupt inhibit number set by the interrupt inhibit number setting unit; and
an interrupt permission/inhibition notifying unit that notifies inhibition of interrupt to the other device for which the interrupt inhibit number is read by the interrupt inhibit number reading unit.

13. The interrupt control device according to claim 12, wherein the interrupt inhibit number setting unit sets the interrupt inhibit number in a register for each of the other devices.

14. The interrupt control device according to claim 13, wherein the register, to which the interrupt number setting unit sets the interrupt number, is the same as the register, to which the interrupt inhibit number setting unit sets the interrupt inhibit number.
